(19) **Europäisches Patentamt**
**European Patent Office**
**Office européen des brevets**

(11) **EP 4 592 984 A1**

(12) **EUROPEAN PATENT APPLICATION**
published in accordance with Art. 153(4) EPC

(43) Date of publication:
**30.07.2025 Bulletin 2025/31**

(21) Application number: **23867928.6**

(22) Date of filing: **14.08.2023**

(51) International Patent Classification (IPC):
***G08G 1/09*** (2006.01)　　　***G05D 1/00*** (2024.01)
***G05D 1/20*** (2024.01)

(52) Cooperative Patent Classification (CPC):
**G05D 1/2279; G05D 1/224; G05D 1/2246;**
**G05D 1/2247; G05D 1/6987; G08G 1/09;**
G05D 2105/285; G05D 2107/17; G05D 2109/10

(86) International application number:
**PCT/JP2023/029466**

(87) International publication number:
**WO 2024/062803 (28.03.2024 Gazette 2024/13)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **21.09.2022 JP 2022150590**

(71) Applicant: **Panasonic Intellectual Property**
**Management Co., Ltd.**
**Kadoma-shi, Osaka 571-0057 (JP)**

(72) Inventors:
• **MATSUMURA, Yuki**
**Kadoma-shi, Osaka 571-0057 (JP)**
• **KUHARA, Shunsuke**
**Kadoma-shi, Osaka 571-0057 (JP)**
• **ARAI, Toshiya**
**Kadoma-shi, Osaka 571-0057 (JP)**

(74) Representative: **Novagraaf International SA**
**Chemin de l'Echo 3**
**1213 Onex, Geneva (CH)**

(54) **INFORMATION PROCESSING METHOD, INFORMATION PROCESSING DEVICE, AND PROGRAM**

(57)　　An information processing method for use in an information processing device includes acquiring remote operation information about remote operation on a first mobile body that requires remote operation among mobile bodies (M1 to Mm) each capable of traveling autonomously and capable of being remotely operated (S104), acquiring mobile body information about one or more second mobile bodies other than the first mobile body, the one or more second mobile bodies being remotely monitored by a monitor who is in charge of remote monitoring of the first mobile body among the mobile bodies (M1 to Mm) (S101), determining, based on the remote operation information and the mobile body information, whether to allow the monitor to perform remote operation on the first mobile body (S106), and giving notification based on the result of the determination as to whether to allow the monitor to perform remote operation on the first mobile body (S108).

FIG. 11

```
          Start
            │
  Acquire mobile body information ── S101
            │
  Acquire operator information ── S102
            │
         S103
    Does first mobile body exist? ──No──┐
            │Yes                         │
  Acquire required time ── S104          │
            │                            │
  Extract operator information about     │
  operator who is in charge of remote    │
  monitoring of first mobile body ── S105│
            │                            │
  Determine presence or absence          │
  of risk ── S106                        │
            │                            │
         S107                            │
    Is remote operation available? ──No──┤
            │Yes                         │
  Transmit operation request ── S108     │
            │                            │
          End ◄───────────────────────────
```

## Description

[Technical Field]

The present disclosure relates to an information processing method, an information processing device, and a program that are for processing information for remotely controlling a plurality of mobile bodies.

[Background Art]

There are remote control methods in which a mobile body capable of traveling autonomously, such as an automatic delivery robot, is monitored by an operator at a remote location and operated by the operator as necessary. In situations where the mobile body cannot run autonomously for some reasons such as the presence of an obstacle on the path of the mobile body, remote operation on the mobile body helps continue service without requiring the operator to rush to the site. In such a remote control method, it is expected that low-cost and highly efficient mobility service will be realized by allowing one operator to monitor a plurality of mobile bodies.

Patent Literature (PTL) 1 discloses a determination device that determines the timing of changing a monitor who monitors a plurality of mobile bodies on the basis of the timing when the status of one mobile body among the plurality of mobile bodies satisfies a predetermined condition.

[Citation List]

[Patent Literature]

[PTL 1]
Japanese Patent No. 6679657

[Summary of Invention]

[Technical Problem]

For example, the monitor monitors a plurality of mobile bodies and operates one mobile body in case of an emergency. If it is necessary to operate another mobile body while operating one mobile body, a case is assumed in which the operation of the latter mobile body cannot be started and is left unattended (this case is hereinafter also referred to as "request neglect"). With the technology described in PTL 1, it is possible to reduce the occurrence of request neglect by taking over remote monitoring of other mobile bodies to another monitor.

However, when it is difficult to take over the remote monitoring of other mobile bodies to another monitor due to reasons such as the other monitor already monitoring a maximum number of mobile bodies that can be monitored, it will be necessary to control stopping of the other mobile bodies. This reduces service efficiency of the mobile body.

In view of this, the present disclosure provides an information processing method and so on that allow efficient remote control of a plurality of mobile bodies.

[Solution to Problem]

An information processing method according to one aspect of the present disclosure is an information processing method for use in an information processing device. The information processing method includes acquiring remote operation information about remote operation on a first mobile body that requires remote operation among a plurality of mobile bodies each capable of traveling autonomously and capable of being remotely operated, acquiring mobile body information about one or more second mobile bodies other than the first mobile body, the one or more second mobile bodies being remotely monitored by a monitor who is in charge of remote monitoring of the first mobile body among the plurality of mobile bodies, determining, based on the remote operation information and the mobile body information, whether to allow the monitor to perform remote operation on the first mobile body, and giving notification based on a result of the determining as to whether to allow the monitor to perform remote operation on the first mobile body.

An information processing device according to one aspect of the present disclosure includes a remote operation information acquirer that acquires remote operation information about remote operation on a first mobile body that requires remote operation among a plurality of mobile bodies each capable of traveling autonomously and capable of being remotely operated, a mobile body information acquirer that acquires mobile body information about one or more second mobile bodies other than the first mobile body, the one or more second mobile bodies being remotely monitored by a monitor who is in charge of remote monitoring of the first mobile body among the plurality of mobile bodies, a determiner that determines, based on the remote operation information and the mobile body information, whether to allow the monitor to perform remote operation on the first mobile body, and a notifier that gives notification based on a result of the determining as to whether to allow the monitor to perform remote operation on the first mobile body.

A program according to one aspect of the present disclosure is a program for causing a computer to execute the information processing method described above.

It is to be noted that these generic or specific aspects of the present disclosure may be realized as a system, a method, an integrated circuit, a computer program, or a recording medium such as a computer-readable CD-ROM, or may be realized as any combination of a system, a method, an integrated circuit, a computer program, or a recording medium. The recording medium may be a non-transitory recording medium.

[Advantageous Effects of Invention]

With the information processing method and so on according to present disclosure, it is possible to remotely control a plurality of mobile bodies with high efficiency.

Further advantages and effects of one aspect of the present disclosure become apparent from the specification and the drawings. These advantages and/or effects are provided by configurations to be described in some embodiments and in the specification and drawings, but not necessarily all of the configurations are required.

[Brief Description of Drawings]

[FIG. 1]

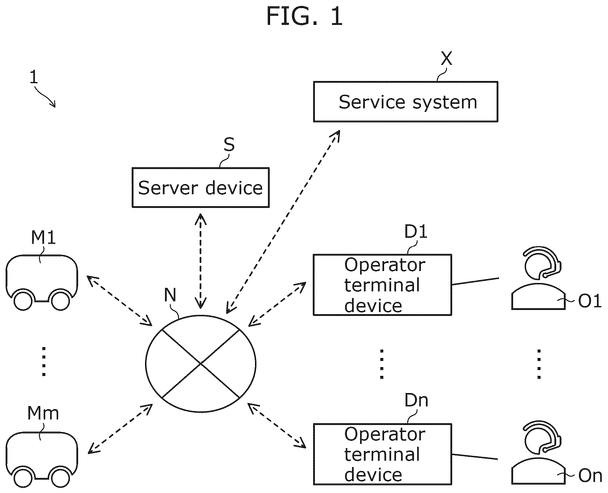

FIG. 1 is a diagram showing one example of an overall configuration of a remote control system according to an embodiment.
[FIG. 2]

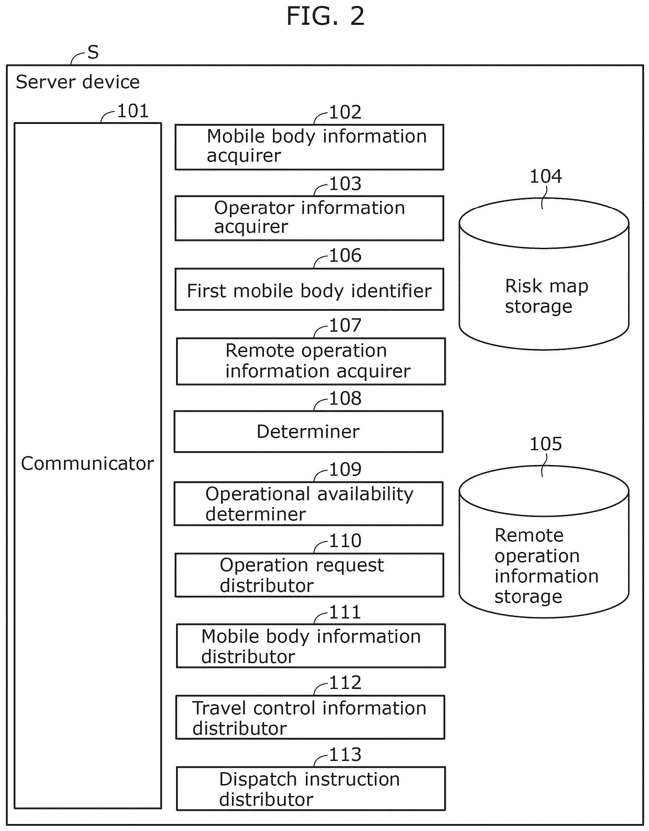

FIG. 2 is a block diagram showing one example of a functional configuration of a server device according to the embodiment.
[FIG. 3]

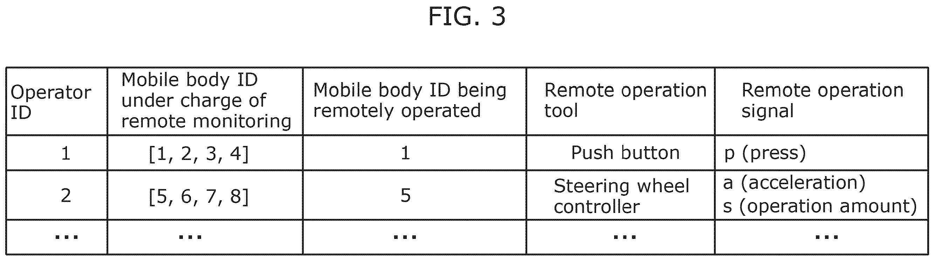

FIG. 3 is a diagram showing one example of a data structure of operator information according to the embodiment.
[FIG. 4]

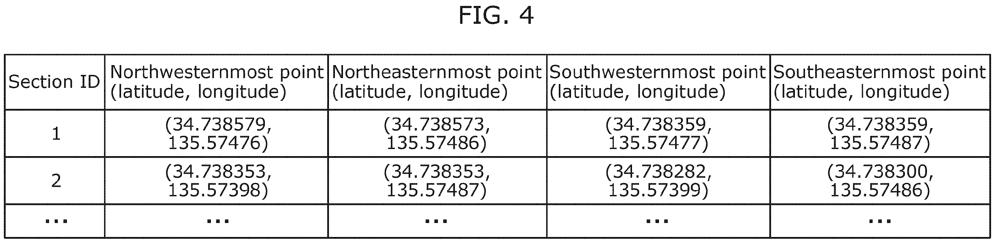

FIG. 4 is a diagram showing one example of a data structure of a plurality of sections according to the embodiment.
[FIG. 5]

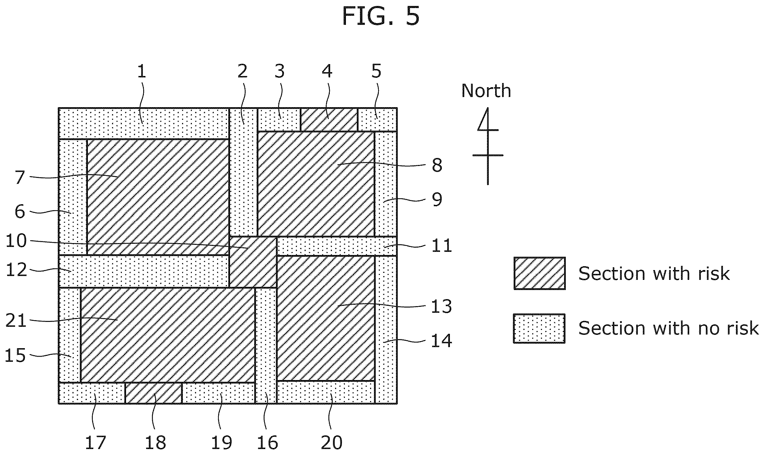

FIG. 5 is a conceptual diagram showing one example of a risk map according to the embodiment.
[FIG. 6]

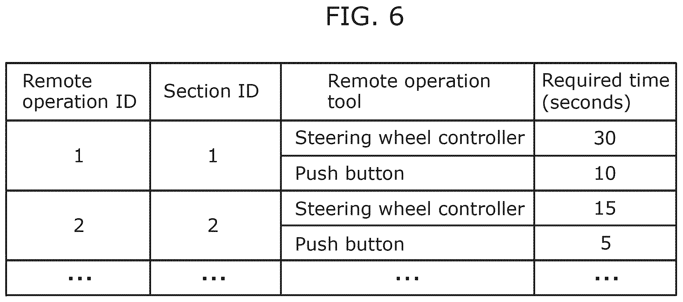

FIG. 6 is a diagram showing one example of a data structure of remote operation information according to the embodiment.
[FIG. 7]

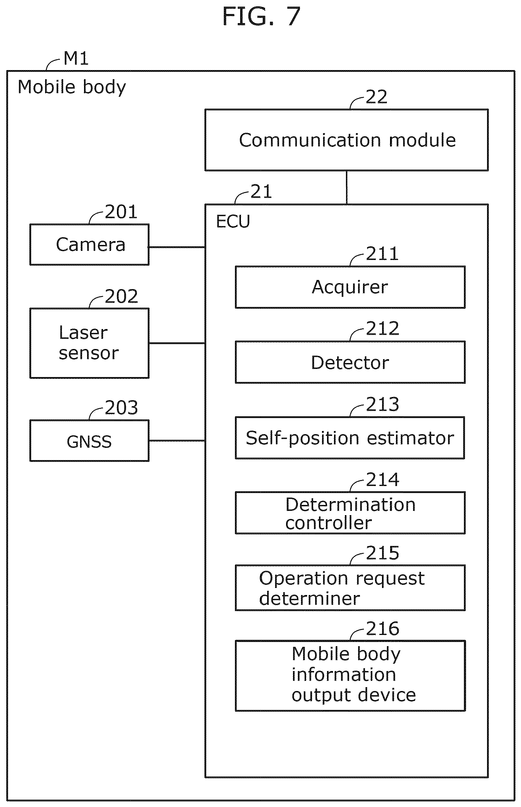

FIG. 7 is a block diagram showing one example of a functional configuration of a mobile body according to the embodiment.
[FIG. 8]

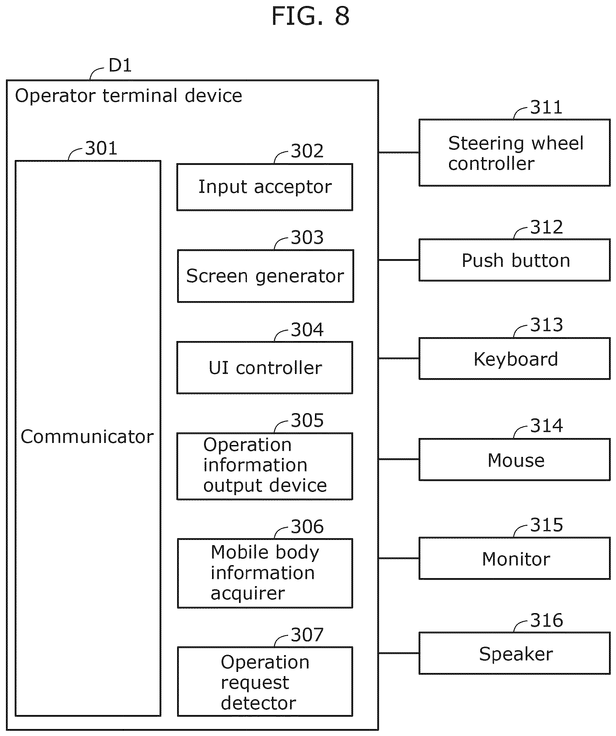

FIG. 8 is a block diagram showing one example of a functional configuration of an operator terminal device according to the embodiment.
[FIG. 9]

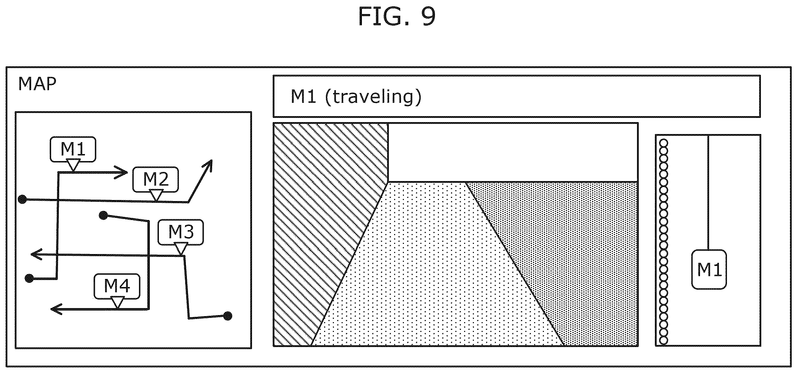

FIG. 9 is a diagram showing one example of a monitoring/operation screen according to the embodiment.
[FIG. 10]

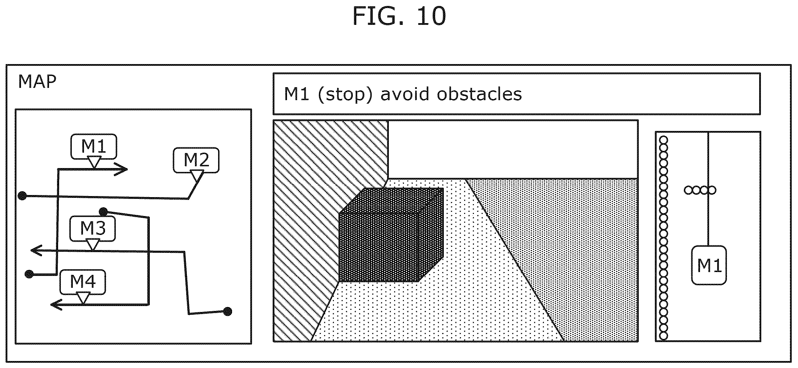

FIG. 10 is a diagram showing another example of the monitoring/operation screen according to the embodiment.
[FIG. 11]

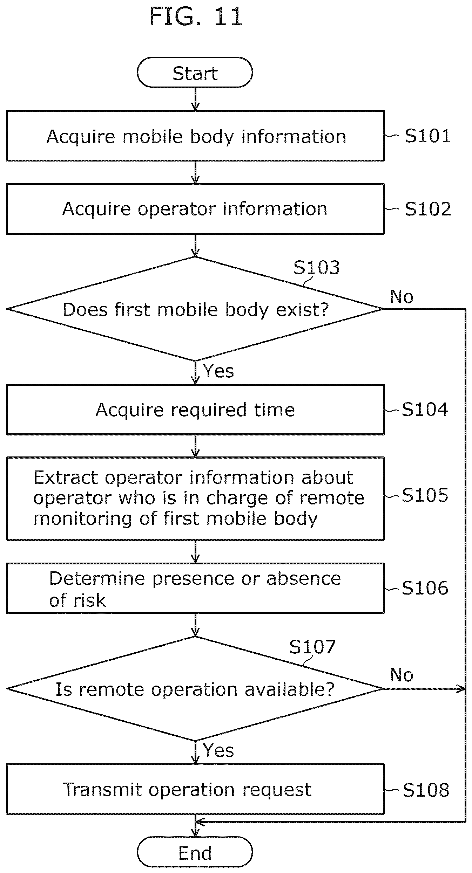

FIG. 11 is a diagram showing one example of a flowchart of processing executed by the server device according to the embodiment.
[FIG. 12]

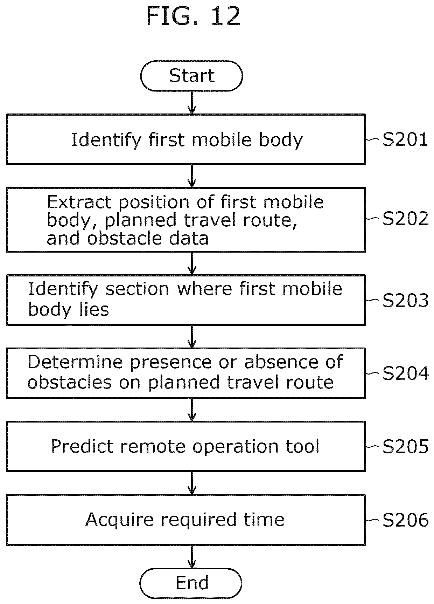

FIG. 12 is a diagram showing one example of a flowchart of processing for acquiring a required time according to the embodiment.
[FIG. 13]

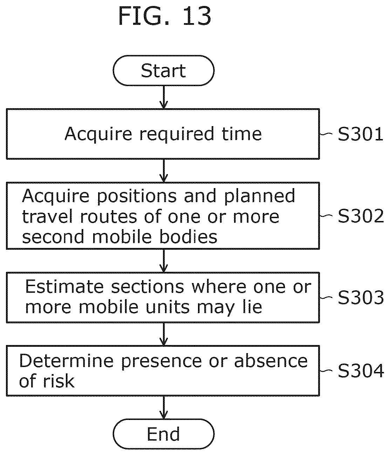

FIG. 13 is a diagram showing one example of a flowchart of processing for determining whether there is a risk according to the embodiment.

[Description of Embodiments]

An embodiment is described hereinafter with reference to the drawings.

The embodiment described below shows a general or specific example. Numerical values, shapes, materials, constituent elements, locations and connection types of constituent elements, steps, the order of steps, and so on shown in the following embodiment are mere examples and do not intend to limit the scope of the present disclosure. Among constituent elements described in the following embodiment, those that are not recited in any independent claim are described as optional constituent elements.

Besides, each drawing is a schematic diagram and does not necessarily provide precise depiction. Constituent elements that are identical are given the same reference signs throughout the drawings.

[Embodiment]

(Explanation of Remotely Operating One Mobile Body without Taking over Remote Monitoring of Other Mobile Bodies)

Firstly, a description is given of feasibility of remotely operating one mobile body without taking over remote monitoring of other mobile bodies.

Specifically, a state in which an operator is able to remotely monitor one mobile body indicates a state in which the operator is able to start remote operation with necessary timing while checking whether remote operation on the mobile body is necessary. For example, if request neglect occurs in other mobile bodies while the other mobile bodies are stuck in an intersection because they cannot travel autonomously, this may impede traffic. On the other hand, request neglect is unlikely to impede traffic in the case where such remote operation by an operator as confirming the safety of the surrounding area and instructing a mobile body to depart, becomes necessary in response to an operation request from another mobile body that has stopped at the point of departure or arrival.

Thus, even if request neglect has occurred, whether there is a risk or not depends on the status of another mobile body that has requested the operation, and if there is no risk, there is no need to take over the remote monitoring of the other mobile body and to control the stopping of the other mobile body. Accordingly, for example, when one operator remotely operates one mobile body, it is only necessary to confirm that there is no risk of request neglect occurring in other mobile bodies that are remotely monitored by the operator.

Hereinafter, the presence of a risk due to request neglect may be expressed as "with risk," and the absence of a risk due to request neglect may be expressed as "with no risk." How long from the current time it is necessary to confirm that there is no risk depends on how much time the operator spends in responding to an operation request. This time may be referred to as the required time. Operations on a mobile body are not only those that take time to perform the operations themselves, such as remote control using a steering wheel controller, but also those that take time to determine when to perform the operations although the operations themselves are instantaneous, such as a departure instruction using a push button. For example, the required time may include both of the aforementioned times, i.e., the time required to make a determination and the time required to perform the operations themselves.

For example, when one operator has received an operation request from one mobile body while remotely monitoring a plurality of mobile bodies, it is predicted that the statuses of the other mobile bodies may change during the required time to perform remote operation in response to the operation request. Then, when there is an operation request from one of the other mobile bodies at an arbitrary time during the required time, whether there is a risk or not is determined. Then, when it is determined that there is always no risk, the operator is allowed to perform remote operation on the one mobile body without taking over the remote monitoring of the other mobile bodies to another operator.

Note that the remote monitoring performed by one operator may simply be to check whether there is an operation request from a plurality of mobile bodies, and is not necessarily limited to making a check by video or audio. One operator may be in charge of remote operation on a plurality of mobile bodies.

[Explanation of Remote Control System]

FIG. 1 is a diagram showing one example of an overall configuration of remote control system 1 according to the embodiment.

Remote control system 1 is a system for allowing a plurality of operators O1 to On to remotely control a plurality of mobile bodies M1 to Mm. As shown in FIG. 1, remote control system 1 includes server device S, mobile bodies M1 to Mm, a plurality of operator terminal devices D1 to Dn, and service system X, server device S being capable of communication with mobile bodies M1 to Mm or the like via network N. In the present embodiment, server device S is one example of an information processing device, and operators O1 to On are each one example of a monitor.

Each of mobile bodies M1 to Mm is capable of traveling autonomously and capable of being remotely controlled. In the present embodiment, each of mobile bodies M1 to Mm is capable of being remotely controlled by one of operators O1 to On.

For example, each of mobile bodies M1 to Mm includes camera 201, laser sensor 202, global navigation satellite system (GNSS) 203, electronic control unit (ECU) 21, and communication module 22 (FIG. 7). Camera 201 and laser sensor 202 observe the surroundings of the mobile body. GNSS 203 acquires position information about the mobile body. ECU 21 controls autonomous travel of the mobile body. Communication module 22 communicates with server device S via, for example, long term evolution (LTE). Each of mobile bodies M1 to Mm may, for example, be an autonomous vehicle such as an automatic delivery robot or an unmanned bus.

Dispatch of vehicles such as where to move mobile bodies M1 to Mm depends on services to be provided. For example, automated delivery robots for on-demand food delivery services need to dispatch vehicles to product location points or product delivery points according to orders from users. Such instructions to dispatch vehicles are determined by service system X for each service, and an interface is defined between service system X and server device S. Service system X transmits, via service device S, vehicle dispatch instructions indicating where to move mobile bodies M1 to Mm.

Operator terminal devices D1 to Dn are devices provided in correspondence with operators O1 to On and for allowing operators O1 to On to remotely monitor or operate all or some of mobile bodies M1 to Mm. Each of operator terminal devices D1 to Dn is connected to output equipment such as monitor 315 and speaker 316, and input equipment such as steering wheel controller 311, push button 312, keyboard 313, mouse 314, and a microphone (FIG. 8).

As an operational form of remote control, for example, operators O1 to On may share remote monitoring and operation of mobile bodies M1 to Mm in advance, such as in the case where operator O1 is in charge of remote monitoring and operation of mobile bodies M1 to M4, and operator O2 is in charge of remote monitoring and operation of mobile bodies M5 to M8. Alternatively, operators O1 to On may remotely monitor the same ones of mobile bodies M1 to Mm, and the operation of one of mobile bodies M1 to Mm may be performed by one of operators O1 to On.

Note that there can be only one operator. In this case, for example, ECU 21 may have a minimum risk maneuver (MRM) function such as stopping the mobile body equipped with ECU 21 (i.e., the mobile body equipped with ECU 21 among mobile bodies M1 to Mm) in a safe position when it is determined that the operator cannot take over travel control of the mobile body. For which of mobile bodies M1 to Mm each of operators O1 to On is in charge of remote monitoring and operation may be determined by, for example, providing a user interface (UI) that allows an operator to freely make a section via the operator terminal device of the operator among operator terminal devices D1 to Dn and then allowing the operator to make a determination by himself/herself. As another alternative, for example, server device S may determine who is in charge of remote monitoring and operation of each of mobile bodies M1 to Mm from among operators O1 to On.

[Explanation of Devices Configuring Remote Control System]

[Server Device]

FIG. 2 is a block diagram showing one example of a functional configuration of server device S according to the embodiment.

Server device S includes communicator 101, mobile body information acquirer 102, operator information acquirer 103, risk map storage 104, remote operation information storage 105, first mobile body identifier 106, remote operation information acquirer 107, determiner 108, operational availability determiner 109, operation request distributor 110, mobile body information distributor 111, travel control information distributor 112, and dispatch instruction distributor 113. For example, communicator 101 may be realized by, for example, a communication module. Mobile body information acquirer 102, operator information acquirer 103, first mobile body identifier 106, remote operation information acquirer 107, determiner 108, operational availability determiner 109, operation request distributor 110, mobile body information distributor 111, travel control information distributor 112, and dispatch instruction distributor 113 may be realized by, for example, a processor. Risk map storage 104 and remote operation information storage 105 may be realized by, for example, memory.

Server device S is connected to mobile bodies M1 to Mm, operator terminal devices D1 to Dn, and service system X via network N.

Communicator 101 transmits and receives information to and from mobile bodies M1 to Mm, operator terminal devices D1 to Dn, and service system X via network N.

Mobile body information acquirer 102 acquires mobile body information out of information received by communicator 101. The mobile body information refers to information about mobile bodies M1 to Mm. For example, the mobile body information may include information transmitted from each of mobile bodies M1 to Mm and indicating at least the presence or absence of a request to remotely operate the mobile body, sensor data such as images and audio acquired by the mobile body, surrounding obstacle data acquired by the mobile body for autonomous travel control, the position of the mobile body on the map, and the planned travel route of the mobile body.

Operator information acquirer 103 acquires operator information out of the information received by communicator 101. The operator information refers to information about operators O1 to On. For example, the operator information may include a mobile body list transmitted from each of operator terminal devices D1 to Dn. The mobile body list is a list of mobile bodies for which the operator terminal device is in charge of remote monitoring among mobile bodies M1 to Mm and that are selected by the operator corresponding to the operator terminal device among operators O1 to On via a UI provided in the operator terminal device. Moreover, if there is a mobile body that is being remotely controlled among mobile bodies M1 to Mm, the operator information may further include information indicating the mobile body and details of the remote operation. The details of the remote operation may refer to, for example, data that indicates what kind of operation signal has been received through which an operation tool such as the steering wheel controller or the push button.

FIG. 3 is a diagram showing one example of a data structure of the operator information according to the embodiment. Operator ID represents an identifier used to distinguish among operators O1 to On. Mobile body ID represents an identifier used to distinguish among mobile bodies M1 to Mm. Mobile body ID in charge of remote monitoring represents which ones of mobile bodies M1 to Mm the operators whose IDs are placed in the same column of the table in FIG. 3 are in charge of remote monitoring among operators O1 to On. Mobile body ID being remotely operated represents which ones of mobile bodies M1 to Mm are remotely controlled by the operators whose IDs are placed in the same column of the table in FIG. 3 among operators O1 to On.

Remote operation signals are stored in different formats depending on a remote operation tool. For example, in the case where the remote operation tool is the push button, whether the push button is pressed (press p) is expressed as 0 or 1. For example, in the case where the operation tool is the steering wheel controller, accelerations a and steering amounts s are stored for travel control of mobile bodies.

Referring back to FIG. 2, risk map storage 104 stores a risk map. The risk map is a map on which one region is divided into a plurality of sections, and each section is classified as either a section where there is a risk due to request neglect (hereinafter, referred to as a section with risk) or a section where there is no risk due to request neglect (hereinafter, referred to as a section with no risk). Specifically, the request neglect as used herein may refer to a state in which one or more second mobile bodies are not remotely controlled. The one or more second mobile bodies are one or more mobile bodies other than the first mobile body, the one or more second mobile bodies being remotely monitored by an operator who is in charge of remote monitoring of the first mobile body that requires remote operation among mobile bodies M1 to Mm (i.e., an operator who is in charge of remote monitoring of the first mobile body among operators O1 to On).

FIG. 4 is a diagram showing one example of a data structure of the sections according to the embodiment. Section ID represents the identifier used to distinguish among the sections. Each section is defined by a rectangular region identified by four points on the map. The points on the map are stored in latitude and longitude. One section is defined by a northwesternmost point (located in the most northwest), a northeasternmost point, a southwestenmost point, and a southeasternmost point. The information about the points on the map may additionally include a height above the sea level, or a hierarchical structure in the case of indoor use. Note that each section may be configured as a polygon with three or more points.

FIG. 5 is a conceptual diagram showing one example of the risk map according to the embodiment. Sections with risk are indicated by rectangles with diagonal pattern, and sections with no risk are indicated by rectangles with dot pattern. Sections with risk and sections with no risk may interchange depending on track records. When each of mobile bodies M1 to Mm passes on one side of a road or sidewalk, some areas of the road or sidewalk may be designated as sections with no risk, and the other areas of the road or sidewalk may be designated as sections with risk. Sections with risk and sections with no risk may interchange depending on the time period and the date and time. Sections with risk and sections with no risk may also interchange depending on weather.

Referring back to FIG. 2, remote operation information storage 105 stores remote operation information. The remote operation information refers to information about remote operation on the first mobile body. For example, the remote operation information may include a required time required to perform remote operation on the first mobile body, and the required time may include a time required to determine the timing of performing remote operation on the first mobile body and a time required to perform remote operation on the first mobile body. Remote operation information storage 105 distinguishes the remote operation on the first mobile body by at least each combination of a remote operation tool and sections, and stores the required time for each combination.

FIG. 6 is a diagram showing one example of a data structure of the remote operation information according to the embodiment. The required time is distinguished by a combination of the section ID and the remote operation tool. The required time for each remote operation ID is stored in seconds by using a value obtained by preliminary verification as the initial value. The value for the required time may be updated based on statistical estimation based on track records. Note that the required time to be stored may be changed depending on text that allows the operator to understand the purpose of remote operation, such as departure after safety confirmation, attention attraction, or obstacle avoidance. The required time to be stored may also be changed depending on the type of remote operation performed by the operator, or may be changed by sensor data that serves as a tool for understanding the surroundings of the first mobile body in order to determine the timing of performing remote operation. The required time to be stored may also be changed by the time period and the date and time. The required time to be stored may also be changed depending on the weather.

First mobile body identifier 106 identifies the first mobile body that requires remote operation in accordance with request information included in the mobile body information acquired by mobile body information acquirer 102. For example, the first mobile body may output the request information for requesting remote operation on the first mobile body, and first mobile body identifier 106 may acquire the request information that is output from the first mobile body and identify the first mobile body in accordance with the request information.

Remote operation information acquirer 107 acquires the remote operation information. For example, remote operation information acquirer 107 may predict the remote operation tool according to whether obstacle avoidance via the steering wheel controller is necessary with reference to the mobile body information acquired by mobile body information acquirer 102, identify a section where the first mobile body is located, with reference to the risk map from the position of the first mobile body included in the mobile body information, and acquires the required time with reference to remote operation information storage 105.

Referring back to FIG. 2, determiner 108 extracts, from the operator information acquired by operator information acquirer 103, information about the operator who is in charge of remote monitoring of the first mobile body identified from among operators O1 to On by first mobile body identifier 106. Then, determiner 108 estimates a section where each of the one or more second mobile bodies may be located within the required time acquired by remote operation information acquirer 107 from the current time, by referencing the position and planned travel route of each of the one or more second mobile bodies included in the mobile body information about the one or more second mobile bodies that are remotely operated by the operator among mobile bodies M1 to Mm. Then, determiner 108 determines, for each section estimated with reference to the risk map, whether the section is a section with risk or a section with no risk.

When determiner 108 has determined that there is no risk with all of the one or more second mobile bodies, operational availability determiner 109 determines that remote operation on the first mobile body is available, whereas when it is determined that there is a risk with at least one of the one or more second mobile bodies, operational availability determiner 109 determines that remote operation on the first mobile body is unavailable.

When operational availability determiner 109 has determined that remote operation is available, operation request distributor 110 distributes operation request information via communicator 101 to the operator terminal device of the operator who performs remote operation among operators O1 to On (i.e., the operator terminal device corresponding to the operator among operator terminal devices D1 to Dn). Operation request distributor 110 is one example of a notifier that gives notification based on the result of the determination as to whether to allow the operator to perform remote operation on the first mobile body.

Mobile body information distributor 111 distributes, to each of operator terminal devices D1 to Dn, mobile body information about mobile bodies that are remotely monitored by the corresponding operator among operators O1 to On (i.e., mobile bodies that are remotely monitored by the corresponding one of operators O1 to On among mobile bodies M1 to Mm) and about the mobile body that is being remotely operated by the corresponding operator among operators O1 to On (i.e., the mobile body being remotely operated by the corresponding operator among mobile bodies M1 to Mm).

Travel control information distributor 112 distributes operation signals included in the operator information to the mobile bodies via communicator 101.

Dispatch instruction distributor 113 acquires dispatch instructions indicating where to move mobile bodies M1 to Mm and distributes the dispatch instructions to the mobile bodies via communicator 101, the dispatch instruction being information transmitted from service system X out of the information received by communicator 101.

In this way, remote operation information acquirer 107 acquires the remote operation information about remote operation on the first mobile body that requires remote operation among mobile bodies M1 to Mm, each capable of traveling autonomously and capable of being remotely operated. In the present embodiment, remote operation information acquirer 107 acquires the remote operation information stored in remote operation information storage 105.

Mobile body information acquirer 102 acquires the mobile body information about one or more second mobile bodies other than the first mobile body, the one or more second mobile bodies being remotely operated by the operator who is in charge of remote monitoring of the first mobile body among mobile bodies M1 to Mm

(i.e., the operator who is in charge of remote monitoring of the first mobile body among operators O1 to On). In the present embodiment, mobile body information acquirer 102 acquires the mobile body information from the one or more second mobile bodies. For example, the mobile body information indicates the position of each of the one or more second mobile bodies and the planned travel route of each of the one or more second mobile bodies.

Determiner 108 determines, in accordance with the remote operation information and the mobile body information, whether to allow the operator to perform remote operation on the first mobile body.

Operation request distributor 110 gives notification based on the result of the determination as to whether to allow the operator to perform remote operation on the first mobile body. For example, operation request distributor 110 gives the notification via the operator terminal device corresponding to the operator who is in charge of remote monitoring of the first mobile body among operator terminal devices D1 to Dn.

In the present embodiment, the first mobile body outputs the request information for requesting remote operation on the first mobile body, mobile body information acquirer 102 acquires the request information output from the first mobile body, and first mobile body identifier 106 identifies the first mobile body in accordance with the request information.

In the present embodiment, the remote operation information includes the required time required to perform remote operation on the first mobile body, and the required time includes the time required to determine timing of performing remote operation on the first mobile body and the time required to perform remote operation on the first mobile body.

In the present embodiment, the required time is determined in advance based on the remote operation tool used for the first mobile body.

In the present embodiment, the required time is determined in advance for every one of sections 1 to 21 (for each of sections 1 to 21) in a region within which the first mobile body moves and that is divided into sections 1 to 21.

Note that the required time may be determined in advance based on at least one of the date on which remote operation is performed on the first mobile body, the time period during which remote operation is performed on the first mobile body, or the weather in which remote operation is performed on the first mobile body. For example, the required time may be set to be relatively short during a date or time period when traffic is light, and may be set to relatively long during a date or time when traffic is heavy. For example, in weather such as sunny skies that makes it easy to perform remote operation, the required time may be set to be relatively short, whereas in weather such as rain that makes it difficult to perform remote operation is difficult, the required time may be set to be relatively long.

In the present embodiment, determiner 108 determines, based on the remote operation information and the mobile body information, whether not performing remote operation on each of the one or more second mobile bodies entails a risk, and when it is determined that there is no risk, the determiner determines to allow the operator to perform remote operation on the first mobile body.

Specifically, in the present embodiment, when at least one of the one or more second mobile bodies is located in a section with risk among sections 1 to 21 during the required time, determiner 108 determines that there is risk. For example, determiner 108 may determine, on the basis of the position and planned travel route of each of the one or more second mobile bodies, whether each of the one or more second mobile bodies is located in a section with a risk among sections 1 to 21 during the required time.

In the present embodiment, for every one of sections 1 to 21 in a region within which the one or more second mobile bodies travel and that is divided into sections 1 to 21, whether the section is either a section with risk or a section with no risk is set in advance.

Note that whether the section is ether a section with risk or a section with no risk may be determined in advance based on at least one of the date on which remote operation is performed on the first mobile body, the time period during which remote operation is performed on the first mobile body, or the weather in which remote operation is performed on the first mobile body. For example, for one of sections 1 to 21, the section may be determined as a section with no risk during a date or time period when traffic is light, and may be determined as a section with risk during a date or time period when traffic is heavy. Moreover, for example, for one of sections 1 to 21, the section may be determined as a section with no risk when the weather makes it easy to perform remote operation (i.e., in the event of clear skies), and may be determined as a section with risk when the weather makes it difficult to perform remote operation (e.g., in the event of rain).

In the present embodiment, when it is determined to allow the operator to perform remote operation on the first mobile body, operation request distributor 110 gives notification indicating that the operator is allowed to perform remote operation on the first mobile body. For example, operation request distributor 110 may distribute an operation request to the operator, in order to give notification indicating that the operator is allowed to perform remote operation on the first mobile body.

In the present embodiment, when it is determined not to allows the operator to perform remote operation on the first mobile body, operation request distributor 110 gives notification indicating that the first mobile body is to be stopped. For example, operation request distributor 110 may distribute information indicating that the first mobile body is to be stopped, in order to give notification indicating that the first mobile body is to be stopped.

[Mobile body]

FIG. 7 is a block diagram showing one example of a functional configuration of mobile body M1 according to the embodiment.

Mobile body M1 includes camera 201 and laser sensor 202 that are for observing the surroundings, GNSS 203 for acquiring position information, ECU 21 for controlling autonomous travel, and communication module 22 for communicating with server device S via network N.

ECU 21 includes acquirer 211, detector 212, self-position estimator 213, determination controller 214, operation request determiner 215, and mobile body information output device 216.

Communication module 22 receives travel control information from server device S and outputs the travel control information to ECU 21, the travel control information including, for example, a dispatch instruction indicating where to move mobile body M1, operations performed by the operator, and operations performed by the MRM function.

Acquirer 211 acquires a dispatch instruction and a travel control instruction from communication module 22.

Detector 212 acquires sensor data from, for example, camera 201, laser sensor 202, and a sound-collecting microphone that are for observing the surroundings of mobile body M1, and detects obstacles that are located in the surroundings.

Self-position estimator 213 estimates the position of mobile body M1 from at least GNSS 203.

Determination controller 214 determines a planned travel route from the dispatch instruction received from communication module 22, the position of mobile body M1 estimated by self-position estimator 213, and the information about surrounding obstacles detected by detector 212, and controls the acceleration, deceleration, and steering of mobile body M1. Or, determination controller 214 controls the acceleration, deceleration, steering of mobile body M1 in accordance with the travel control instruction received from communication module 22.

Operation request determiner 215 determines to output an operation request when autonomous travel cannot continue due to, for example, stopping for a certain period of time.

Mobile body information output device 216 generates the mobile body information and outputs the mobile body information to communication module 22, the mobile body information including at least the presence or absence of an operation request, the sensor data, the surrounding obstacle data, the position of the mobile body, and the planned travel route.

Communication module 22 accepts the mobile body information from ECU 21 and transmits the mobile body information to server device S. Note that communication module 22 may generate part or all of the mobile body information.

Each of mobile bodies M2 to Mm is similar in configuration to mobile body M1, and therefore detailed descriptions thereof shall be omitted.

[Operator Terminal Device]

FIG. 8 is a block diagram showing one example of a functional configuration of operator terminal device D1 according to the embodiment. Operator terminal device D1 includes communicator 301, input acceptor 302, screen generator 303, UI controller 304, operator information output device 305, mobile body information acquirer 306, and operation request detector 307.

Communicator 301 has a function of transmitting and receiving information to and from server device S connected thereto via network N.

Input acceptor 302 accepts input from the input equipment of operator O1, such as steering wheel controller 311, push button 312, keyboard 313, and mouse 314.

Screen generator 303 generates, in response to input from operator O1, a login screen, a selection screen for selecting mobile bodies for which the operator is in charge of remote monitoring and operation from among mobile bodies M1 to Mm, and a monitoring/operation screen.

UI controller 304 controls the output equipment such as monitor 315 and speaker 316 in order to present the generated screen.

Operator information output device 305 outputs the operator information to server device S, the operator information including operators who have at least logged in the device via communicator 301, mobile bodies that are selected by the operators to monitor and operate, and operation signals transmitted to the mobile bodies. When generating the monitoring/operation screen, screen generator 303 uses the mobile body information acquired by mobile body information acquirer 306.

Mobile body information acquirer 306 acquires, out of the information received by communicator 301, mobile body information about mobile bodies that are remotely monitored by operator O1 (i.e., mobile bodies that are remotely monitored by operator O1 among mobile bodies M1 to Mm).

Operation request detector 307 detects whether the information received by communicator 301 includes a request for remote operation to operator O1.

FIG. 9 is a diagram showing one example of the monitoring/operation screen according to the embodiment. Specifically, FIG. 9 shows one example of the monitoring/operation screen when operator O1 has selected to have charge of remote monitoring of mobile bodies M1 to M4. The positions and planned travel routes of the mobile bodies, which are included in the mobile body information about mobile bodies M1 to M4 acquired by mobile body information acquirer 306, are displayed with icons and lines with arrows on MAP. The sensor data included in the mobile body information about mobile body M1 is displayed with a video of first person view, and the position of the mobile body relative to an obstacle is displayed with a point group of third person view.

Simultaneously, mobile bodies M2 to M4 may also be displayed with video or a point group. When the icon of any mobile body on MAP is selected with keyboard 313 and mouse 314, input acceptor 302 may accept this input and switch the mobile body whose sensor data is displayed. Alternatively, the mobile body that has made the operation request may be displayed separately from the icons of the other mobile bodies by, for example, coloring the icon of the mobile body that has made the operation request in a different color from the icons of the other mobile bodies.

FIG. 10 is a diagram showing another example of the monitoring/operation screen according to the embodiment. Specifically, FIG. 10 shows another example of the monitoring/operation screen when operator O1 has selected to have charge of remote monitoring of mobile bodies M1 to M4. For example, when mobile body M1 has made an operation request, server device S determines whether to allow operator O1 to perform remote operation on mobile body M1. When having determined to allow operator O1 to perform remote operation on mobile body M1, server device S distributes the request for remote operation to operator O1. When operation request detector 307 of operator terminal device D1 has detected this request for remote operation, the request for remote operation is notified not only with the display in FIG. 9, but also in text form. This enables operator O1 to notice the request and start operation.

Note that input acceptor 302 may be configured not to accept some operations until operation request detector 307 detects a request for remote operation. This prevents the occurrence of human errors caused by the intervention of unnecessary operations.

Moreover, in the case where a plurality of mobile bodies are displayed with video or a point group at the same time and if an operation request is received from any of the mobile bodies, display may be switched to displaying only the mobile body that has made the operation request. For example, in the case where a plurality of mobile bodies are displayed at the same time, only camera images from the front of each mobile body may be displayed. In the case where only one mobile body is displayed, more information about the mobile body may be displayed by, for example, displaying camera images from all directions of the mobile body.

On the contrary, if sufficient information enough to perform remote operation on one mobile body is obtained from display of a plurality of mobile bodies, display contents of the other mobile bodies may be maintained recognizable in peripheral vision without changing the display of the mobile bodies.

[One Example of Processing Performed by Server Device]

FIG. 11 is a diagram showing one example of a flowchart of the processing performed by server device S according to the embodiment. Specifically, FIG. 11 is a flowchart showing one example of an overview of the processing repeatedly performed at regular intervals by server device S.

First, mobile body information acquirer 102 acquires the latest mobile body information transmitted from mobile bodies M1 to Mm, out of the information received by communicator 101 (S101).

Operator information acquirer 103 acquires the latest operator information transmitted from operator terminal devices D1 to Dn, out of the information received by communicator 101 (S102).

First mobile body identifier 106 determines whether there is a first mobile body (S103). For example, first mobile body identifier 106 determines whether there is a first mobile body, in accordance with the presence or absence of an operation request included in the mobile body information acquired in S101.

Specifically, for example, the first mobile body outputs request information for requesting remote operation on the first mobile body. Mobile body information acquirer 102 acquires the request information output from the first mobile body. When mobile body information acquirer 102 has acquired the request information, first mobile body identifier 106 determines that there is a first mobile body. When there is a first mobile body, first mobile body identifier 106 identifies the first mobile body in accordance with the request information. When first mobile body identifier 106 has determined that there is no first mobile body, the processing ends.

When it is determined that there is a first mobile body, remote operation information acquirer 107 identifies which remote operation tool is necessary, from the mobile body information acquired in S101 and estimates the required time with reference to remote operation information storage 105 (S104). Details of S104 will be described later.

Determiner 108 extracts, from the operator information acquired in S102, operator information about the operator who is in charge of remote monitoring of the first mobile body among operators O1 to On (S105).

Determiner 108 determines whether there is a risk or not (S106). For example, determiner 108 estimates predicted positions of one or more second mobile bodies that are remotely monitored by the operator extracted in S105, within the required time determined in S104 from the current time with respect to the positions and planned travel routes of mobile bodies M1 to Mm included in the mobile body information acquired in S101. Then, if an operation request is transmitted from any second mobile body at arbitrary timing within the required time from the current time, determiner 108 references the risk map and determines whether there is a risk or not at the predicted position of that second mobile body. Details of S106 will be described later.

Operational availability determiner 109 determines whether remote operation on the first mobile body is available (S107). For example, when it is determined in S106 that there is no risk with all of the one or more second mobile bodies, operational availability determiner 109 determines that remote operation on the first mobile body is available (Yes in S107). On the other hand, when it is determined that there is a risk with at least one of the second mobile bodies, operational availability determiner 109 determines that remote operation on the first mobile body is unavailable (No in S107), and the processing ends.

When remote operation on the first mobile body is determined available in S107, operation request distributor 110 distributes the operation request via communicator 101 to the operator terminal device of the operator who is in charge of remote monitoring of the first mobile body (S108). When remote operation on the first mobile body is determined unavailable in S107, it is conceivable to take over the remote monitoring of the first mobile body to another operator, to take over the remote monitoring of the one or more second mobile bodies to other operators, or to instruct the first mobile body to perform MRM control as the operation request cannot be responded to.

Firstly, in the case of taking over the remote monitoring of the first mobile body, a margin required until other operators who had not remotely monitored the first mobile body up to that time become able to remotely monitor the first mobile body is added to the required time, and the processing of S106 is performed. This enables the other operators to also determine in the same manner whether remote operation on the first mobile body is available, and an operator who is determined to be capable of the remote operation can take over the remote monitoring of the first mobile body. Meanwhile, in the case of taking over the remote monitoring of the one or more second mobile bodies, an operator who is not in remote operation may take over the remote monitoring. While the other operators are all in remote operation, travel control information distributor 112 instructs the one or more second mobile bodies to perform MRM control via communicator 101 as the operation request cannot be responded to. Note that determination controller(s) 214 of the one or more second mobile bodies may automatically determine to perform MRM control due to factors such as the time elapsed after the issuance of the operation request.

In this way, when it is determined to allow the operator to perform remote operation on first mobile body (Yes in S107), operation request distributor 110 may, for example, give notification indicating that the operator is allowed to perform remote operation on the first mobile body, by distributing the operation request to the operator. When it is determined not to allow the operator to perform remote operation on the first mobile body (No in S107), operation request distributor 110 may, for example, give notification indicating that the first mobile body is to be stopped, by distributing information indicating stopping of the first mobile body.

[Details of Estimation of Required Time (S104)]

FIG. 12 is a diagram showing one example of a flowchart of processing for acquiring the required time according to the embodiment. Specifically, FIG. 12 is a flowchart showing one example of the processing of S104. For example, this processing may be performed after the first mobile body has been identified in S103.

First, remote operation information acquirer 107 acquires the mobile body ID of the first mobile body to identify the first mobile body (S201). For example, the mobile body ID of the first mobile body is expressed by m.

Remote operation information acquirer 107 extracts, from the mobile body information acquired in S101, the position, the planned travel route, and the obstacle data that are included in the mobile body information about the first mobile body (S202). Specifically, for example, the position included in the mobile body information about first mobile body m is expressed as coordinate point $p^m$ that indicates the latitude and the longitude on the map, and the travel direction is expressed as orientation $\theta$ in the clockwise direction with north at zero degrees. The planned travel route is expressed as a list of discrete coordinates $[w_1^m, ..., w_N^m]$ to the point of arrival on the map. The obstacle data is expressed as distance $d(\alpha)$ of orientation $\alpha$ to the obstacle, with the travel direction of first mobile body m set to zero degrees and with orientation $\alpha$ being in the clockwise direction. The resolution of the orientation of the obstacle data is expressed as $\Delta\alpha$.

Remote operation information acquirer 107 identifies in which section the position of the first mobile body extracted in S202 is located on the risk map (S203). Specifically, for example, in which section first mobile body m is located, i.e., point-in-polygon determination, can be made by using a common crossing number algorithm. For example, a horizontal line may be drawn from a point, and if the number of times the horizontal line intersects with the edges of a polygon is odd, it is determined that the point is on the inside of the polygon. The section ID of the identified section is expressed as $b^m$.

Remote operation information acquirer 107 determines, based on the planned travel route and the obstacle data extracted in S202, whether there is an obstacle on the planned travel route (S204).

Specifically, for example, where the first mobile body will move next may be acquired from information about a line segment from $p^m$ to $w_1^m$ on the basis of position $p^m$ of first mobile body m and $[w_1^m, ..., w_N^m]$. Also, information about the position of the obstacle on the map is acquired by a common coordinate system conversion using position $p^m$ of first mobile body m, travel direction $\theta$, and obstacle data $d(\alpha)$. Information about the distance between the obstacle and the planned travel route can be acquired using a common formula for the distance between a point and a straight line. The distance information is acquired using the obstacle data at resolution $\Delta\alpha$ of 0 to 360 degrees and, for example if the obstacle distance exceeding or equal to a specific number indicates distances less than a threshold value, it is determined that there is an obstacle on the planned travel route. Note that, after the first mobile body has arrived at $w_1^m$, the above-described determination may also be performed for a further route because where the first mobile body will move next can be acquired from the information about the line segment from $w_i^m$ to $w_s^m$.

Remote operation information acquirer 107 predicts a remote operation tool (S205). For example, in the case where there is an obstacle, remote operation information acquirer 107 determines that avoidance of the obstacle by an operator is necessary, and may predict the steering wheel controller as the remote operation tool. In the case where there are no obstacles, for example, remote operation information acquirer 107 may predict the push button as the remote operation tool (S205).

Remote operation information acquirer 107 acquires the required time by collating the risk map with the section where the mobile body lines identified in S203 and the remote operation tool predicted in S205 (S206).

As a specific example of the above-described processing, a case is described in which the section ID of the section where the first mobile body is located is 2 in FIG. 5.

In S201, remote operation information acquirer 107 acquires the mobile body ID of the first mobile body as m.

In S202, remote operation information acquirer 107 extracts, from the mobile body information about first mobile body m, the position expressed as $p^m$, the travel direction expressed as $\theta$, the planned travel route expressed as $[w_1^m, ..., w_N^m]$, and the obstacle data expressed as distance $d(\alpha)$ of orientation $\alpha$ at resolution $\Delta\alpha$.

In S203, remote operation information acquirer 107 identifies section where first mobile body m is located as ($b^m$ = 2).

In S204, remote operation information acquirer 107 firstly acquires information about a line segment from $p^m$ to $w_1^m$. Then, information about the position of the obstacle on the map is acquired from $p^m$, travel direction $\theta$, and obstacle data $d(\alpha)$. Then, distance information is acquired from the information about the line segment and the information about the position of the obstacle described above by using a common formula for the distance between a point and a straight line. Similarly, distance information is acquired from the obstacle data at resolution $\Delta\alpha$ of 0 to 360 degrees, and if the obstacle data exceeding or equal to a specified number indicates distances less than a threshold value, it is determined that there is an obstacle on the planned travel route.

Since having determined the presence of an obstacle in S204, remote operation information acquirer 107 predicts the steering wheel controller as the remote operation tool in S205.

Remote operation information acquirer 107 determines the required time as 15 (seconds) by collating section $b^m$ = 2 identified in S203 and the remote operation tool (steering wheel controller) predicted in S205 with the table shown in FIG. 6.

[Details of Determination as to Presence or Absence of Risk (S106)]

FIG. 13 is a diagram showing one example of a flowchart of processing for determining whether there is a risk or not according to the embodiment. Specifically, FIG. 13 is a flowchart showing one example of the processing of S106. For example, this processing may be performed next to the extraction of the operator information about the operator who is in charge of remote monitoring of the first mobile body in S105. This processing is performed for each operator.

Firstly, determiner 108 acquires the required time estimated in S104 (S301). Specifically, for example, the value (seconds) of the required time acquired is expressed as $\Delta t$.

Then, determiner 108 acquires positions and planned travel routes included in the mobile body information about the one or more remotely monitored second mobile bodies included in the operator information extracted in S105 (S302). Specifically, for example, the one or more remotely monitored second mobile bodies included in the extracted operator information are expressed as set M of mobile bodies ID, i.e., M = {$m_1, m_2, ..., m_k$}. The mobile body whose mobile body ID is m is expressed as mobile body m. The position included in the mobile body information about mobile body m is expressed as coordinate point $p^m$ that indicates the latitude and the longitude on the map. The planned travel route is expressed as a list of discrete coordinates [$w_1^m, ..., w_N^m$] to the point of arrival on the map.

Determiner 108 estimates sections where the one or more second mobile bodies being remotely monitored may be located within required time $\Delta t$ from the current time (S303). Specifically, for example, determiner 108 determines in which section each of position $p^m$ of mobile body m and [$w_1^m, ..., w_N^m$] are included. Point-in-polygon determination can be made by using a common crossing number algorism. For example, a horizontal line may be drawn from a point, and if the number of times the horizontal line intersects with the edges of a polygon is odd, it is determined that the point is on the inside of the polygon. The result of the determination is expressed as a list of section IDs [$b_0^m, ..., b_N^m$].

Then, coordinates are obtained that are reachable by mobile body m on the planned travel route within concentration time $\Delta t$ from the current time. Firstly, the time required to reach $w_1^m$ from position $p^m$ can be calculated by the following expression using average speed $v_k$ of the mobile body.

[Expression 1]

$$\frac{w_0{}^m - p^m}{v_k}$$

Similarly, the time required to reach $w_n^m$ from $w_{n-1}^m$, where $1 < n \leq N$, can be calculated by the following

expression.

[Expression 2]

$$\frac{w_n{}^m - w_{n-1}{}^m}{v_k}$$

Note that the average speed may be set for each mobile body m. The average speed may also be set to different values for routes and sections. Some factors such as traffic conditions and service conditions may be taken into consideration. Specifically, traffic conditions may correspond to, for example, a red signal or a traffic jam. Service conditions may correspond to, for example, loading, unloading, or refueling. For example, the average speed may be adjusted according to factors such as traffic conditions and service conditions. Also, an additional time may be added depending on factors such as traffic conditions and service conditions.

The times it take to reach far-off points from the current location are added in order by using the above expressions, and furthest point of arrival $w_x{}^m$ is obtained that can be reached within $\Delta t$. At this time, if duplicate section IDs are removed from $[b_0{}^m, ..., b_x{}^m]$, it is possible to acquire the result of estimated sections where mobile body m may be located within required time $\Delta t$ from the current time.

Determiner 108 references the risk map shown in FIG. 5 for all of the estimated sections and thereby determines whether there is a risk with each of the one or more second mobile bodies (S304).

As a specific example of the above-described processing, a case is described in which the sections where the one or more second mobile bodies may be located within required time $\Delta t$ from the current time are all sections with no risk shown in FIG. 5.

In S301, determiner 108 acquires required time $\Delta t$.

In S302, determiner 108 acquires position $p^m$ and planned travel route $[w_1{}^m, ..., w_N{}^m]$ that are included in the mobile body information about each mobile body m included in set M of mobile body IDs of the one or more second mobile bodies.

Hereinafter, a case is described in which, as the result of the calculation described above, determiner 108 estimates sections 1, 2, 5, 9, 15, and 17 as the sections where the one or more second mobile bodies may be located within concentration time $\Delta t$ from the current time in S303.

More specifically, in the case where a set of mobile body IDs of mobile bodies that are remotely monitored among mobile bodies M1 to Mm is {1, 2, 3}, sections on the planned travel route of mobile body M1 are [1, 2, 10, 16], and the furthest point of arrival that can be reached within required time $\Delta t$ is located in section 2, sections [1, 2] are estimated as the sections where mobile body M1 may be located. In the case where sections on the planned travel route of mobile body M2 are [5, 9, 11, 10, 12] and the furthest point of arrival that can be reached within required time $\Delta t$ is located in section 9, sections [5, 9] are estimated as the sections where mobile body M2 may be located. In the case where sections on the planned travel route of mobile body M3 are [15, 17, 18, 19] and the furthest point of arrival that can be reached within required time $\Delta t$ is located in section 17, sections [15, 17] are estimated as the sections where mobile body M3 may be located. In this case, the result of the estimation is [1, 2, 5, 9, 15, 17].

In S304, determiner 108 references [1, 2, 5, 9, 15, 17] on the risk map shown in FIG. 5 and determines that there is no risk with any of mobile bodies M1 to M3.

(Operation Request during Remote Operation)

A case is described in which operation requests come up from other mobile bodies before completion of a remote operation on one mobile body.

Firstly, as described above, after it is confirmed that, during remote operation on one mobile body, no operation requests with risk come up from other remotely monitored moving objects, remote operation on the one mobile body is determined available, and an operation request is distributed to an operator. Thus, requests that come up during remote operation are operation requests with no risk. In this case, since there is no risk, the next remote operation can also be performed by performing the processing shown in the flowchart in FIG. 11 after the current remote operation is completed.

It is also conceivable that a plurality of operations requests as described above may come up by the time remote operation is completed. In this case, a mobile body with higher influence on service provision may be prioritized. For example, in the case of food delivery service by an automatic delivery robot, travel for loading or delivery has priority over travel back to the base. In this case, service system X transmits the degree of priority together with a dispatch instruction to server device S, so that servicer device S is capable of taking the degree of priority into consideration when identifying the first mobile body in S103.

Next, in the case where operation requests come up from other mobile bodies during remote operation, a case is conceivable in which remote operation actually takes more time than the required time, and the information used to determine the presence or absence of a risk is different from the actual information, such as a case where the sections where the other mobile bodies are estimated to be located is different from the sections where the other mobile bodies is actually located. In such a case, as in the case where remote operation is determined unavailable in S107, the remote monitoring of the first mobile body is taken over to another operator, of the remote monitoring of the one or more second mobile bodies is taken over to other operators, or the first mobile body is instructed to perform MRM control as the operation request cannot be responded to.

First, in the case of taking over the remote monitoring of the first mobile body, a margin required until other operators who had not remotely monitored the first object up to that time become able to remotely monitor the first mobile body is added to the required time, and the processing of S106 is performed. This enables the other operators to also determine in the same manner whether remote operation is available, and an operator who is determined to be capable of the remove operation may take over the remote monitoring of the first mobile body. Meanwhile, in the case of taking over the remote monitoring of the one or more second mobile bodies, an operator who is not in remote operation may take over the remote monitoring. While the other operators are all in remote operation, travel control information distributor 112 instructs the first mobile body via communicator 101 to perform MRM as the operation request cannot be responded. Note that determination controller 214 of the first mobile body may automatically determine to perform MRM control due to factors such as the time elapsed since the issuance of the operation request.

The information processing method according to the embodiment is an information processing method for use in an information processing device (server device S). In the information processing method, the remote operation information about remote operation on a first mobile body is acquired, the first mobile body being a mobile body that requires remote operation among mobile bodies M1 to Mm each capable of traveling autonomously and capable of being remotely operated (S104). Then, the mobile body information about one or more second mobile bodies is acquired, the one or more second mobile bodies being other than the first mobile body and being remotely operated by a monitor who is in charge of remote monitoring of the first mobile body among mobile bodies M1 to Mm (an operator who is in charge of remote monitoring of the first mobile body among operators O1 to On) (S101). Then, whether to allow the monitor to perform remote operation on the first mobile body is determined based on the remote operation information and the mobile body information (S106). Then, notification is given based on the result of the determination as to whether to allow the monitor to perform remote operation on the first mobile body (S108).

With this method, it is possible to determine, based on the remote operation information and the mobile body information, whether to allow the monitor to perform remote operation on the first mobile body. This allows efficient remote control of mobile bodies M1 to Mm.

In the information processing method according to the embodiment, the first mobile body outputs the request information for requesting remote operation on the first mobile body, and the request information output from the first mobile body is acquired (S101) and used as a basis to identify the first mobile body (S201).

This facilitates the identification of the first mobile body and allows more efficient remote control of mobile bodies M1 to Mm.

In the information processing method according to the embodiment, the remote operation information includes the required time required to perform remote operation on the first mobile body, and the required time includes the time required to determine the timing of performing remote operation on the first mobile body and the time required to perform remote operation on the first mobile body.

With this method, whether to allow the monitor to perform remote operation on the first mobile body is determined based on the required time. This allows more efficient remote control of mobile bodies M1 to Mm.

In the information processing method according to the embodiment, the required time is determined in advance based on the remote operation tool used for the first mobile body.

With this method, whether to allow the monitor to perform remote operation on the first mobile body is determined based on the required time, which is determined based on the remote operation tool used for the first mobile body. This allows more efficient remote control of mobile bodies M1 to Mm.

In the information processing method according to the embodiment, the required time is determined in advance for each of a plurality of sections 1 to 21 in a region within which the first mobile body moves and that is divided into sections 1 to 21.

With this method, whether to allow the monitor to perform remote operation on the first mobile body is determined based on the required time determined for each of sections 1 to 21. This allows more efficient remote control of mobile bodies M1 to Mm.

In the information processing method according to the embodiment, the required time may be determined in advance based on at least one of the date on which remote operation is performed on the first mobile body, the time period during which remote operation is performed the first mobile body, or the weather in which remote operation is performed on the first mobile body.

With this method, whether to allow the monitor to perform remote operation on the first mobile body is determined based on the required time that is determined based on at least one of the date on which remote operation is performed on the first mobile body, the time period during which remote operation is performed on the first mobile body, or the weather in which remote operation is performed on the first mobile body. This allows more efficient remote control of mobile bodies M1 to Mm.

In the information processing method according to the embodiment, whether not performing remote operation on each of one or more second mobile bodies entails a risk is determined based on the remote operation information and the mobile body information (S106), and when it is determined that there is no risk, the monitor is allowed to perform remote operation on the first mobile body (S107).

With this method, the monitor is allowed to perform remote operation on the first mobile body when it is determined that there is no risk. Thie allows more efficient remote control of mobile bodies M1 to Mm.

In the information processing method according to the embodiment, for each of sections 1 to 21 in a region within which the one or more second mobile bodies travel and that is divided into sections 1 to 21, it is determined whether the section is a section with risk.

This facilitates the determination as to whether there is a risk or not and allows more efficient remote control of mobile bodies M1 to Mm.

In the information processing method according to the embodiment, whether the section is a section with risk may be determined in advance based on at least one of the date on which remote operation is performed on the first mobile body, the time period during which remote operation is performed on the first mobile body, or the weather in which remote operation is performed on the first mobile body.

This improves the accuracy of the determination as to whether there is a risk or not and allows more efficient remote control of mobile bodies M1 to Mm.

In the information processing method according to the embodiment, the remote operation information includes the required time required to perform remote operation on the first mobile body. The required time includes the time required to determine the timing of remote operation on the first mobile body and the time required to perform remote operation on the first mobile body. Then, it is determined that there is a risk when at least one of the one or more second mobile bodies is located in a section with risk among sections 1 to 21 during the required time (S106).

This further facilitates the determination as to whether there is a risk or not and accordingly allows more efficient remote control of mobile bodies M1 to Mm.

In the information processing method according to the embodiment, when the monitor is determined to be allowed to perform remote operation on the first mobile body, notification indicating that the monitor is allowed to perform remote operation on the first mobile body is given (S108).

This allows the monitor to efficiently perform remote operation on the first mobile body and thereby allows more efficient remote control of mobile bodies M1 to Mm.

In the information processing method according to the embodiment, when the monitor is determined not to be allowed to perform remote operation on the first mobile body, notification indicating stopping of the first mobile body is given.

This allows the monitor to easily recognize that the first mobile body is to be stopped and thereby allows more efficient remote control of mobile bodies M1 to Mm.

The information processing device according to the embodiment includes remote operation information acquirer 107, mobile body information acquirer 102, determiner 108, and notifier (operation request distributor 110). Remote operation information acquirer 107 acquires remote operation information about remote operation on the first mobile body that requires remote operation among mobile bodies M1 to Mm that are each capable of traveling autonomously and capable of being remotely operated. Mobile body information acquirer 102 acquires mobile body information about one or more second mobile bodies other than the first mobile body, the one or more second mobile bodies being remotely monitored by an operator who is in charge of remote monitoring of the first mobile body among mobile bodies M1 to Mm. Determiner 108 determines, based on the remote operation information and the mobile body information, whether to allow the monitor to perform remote operation on the first mobile body. Notifier (operation request distributor 110) gives notification based on the result of the determination as to whether the monitor is allowed to perform remote operation on the first mobile body.

This device achieves functional effects similar to those achieved by the information processing method described above.

The program according to the embodiment is a program for causing a computer to execute the information processing method described above.

This program achieves functional effects similar to those achieved by the information processing method described above.

[Other Embodiments]

While the information processing method and so on according to one or a plurality of aspects have been described with reference to the embodiment, the present disclosure is not intended to be limited to this embodiment. The present disclosure may also include those that are obtained by applying various modifications conceivable by those skilled in the art to the embodiment without departing from the scope of the present disclosure.

In the above-described embodiment, each constituent element may be configured as dedicated hardware, or may be realized by executing a software program appropriate to each constituent element. Each constituent element may also be realized by a program executing unit such as a processor or a central processing unit (CPU) reading out and executing software programs recorded on a recording medium such as a hard disk or semiconductor memory. The software as used herein that realizes the device and so on according to the aforementioned embodiment is a program for causing a computer to execute each step included in the flowcharts shown in FIGS. 11 to 13.

Note that the following cases are also included in the present disclosure.

(1) At least one of the devices described above may specifically be a computer system configured by, for example, a microprocessor, ROM, RAM, a hard disk unit, a display unit, a keyboard, and a mouse. The RAM or the hard disk unit may store computer programs. At least one of the devices described above achieves its functions as a result of the microprocessor operating in accordance with computer programs. The computer programs as used herein may be configured by a combination of multiple command codes that indicate a command given to the computer in order to achieve a predetermined function.

(2) Some or all of constituent elements that configure at least one of the devices described above may be configured as a single system large scale integration circuit (LSI). The system LSI is ultra-multifunctional LSI manufactured by integrating a plurality of components on a single chip, and is specifically a computer system that may include, for example, a microprocessor, ROM, and RAM. The RAM stores computer programs. The system LSI achieves its functions as a result of the microprocessor operating in accordance with the computer programs.

(3) Some or all of constituent elements that configure at least one of the devices described above may be configured as an IC card or a stand-alone module that is detachable from the device. The IC card or the module is a computer system configured by, for example, a microprocessor, ROM, and RAM. The IC card or the module may include the aforementioned super-multi-function LSI. The IC card or the module achieves its functions as a result of the microprocessor operating in accordance with computer programs. The IC card or the module may also be tamper-resistant.

(4) The present disclosure may be used as the method described above. The method described above may be realized by computer programs executed by a computer, or may be realized by digital signals generated in accordance with computer programs.

A computer-readable recording medium that record the computer programs or the digital signals may be realized. Examples of the computer-readable recording medium include a flexible disk, a hard disk, a CD-ROM, an MO, a DVD, a DVD-ROM, a DVD-RAM, a Blu-ray (registered trademark) disc, or semiconductor memory. The computer programs or the digital signals may be realized by being recorded on such a recording medium.

The computer programs or the digital signals may be transmitted via, for example, telecommunication lines, wireless or wired communication lines, networks typified by the Internet, or data communications.

The computer programs or the digital signals may be recorded on and transferred with a recording medium or may be transferred via a network or the like, so that methods corresponding to these computer programs or digital signals are executed by another independent computer system.

[Appendix]

The following techniques are disclosed from the description of the above description and so on.

[Technique 1]

An information processing method for use in an information processing device. The information processing method includes acquiring remote operation information about remote operation on a first mobile body that requires remote operation among a plurality of mobile bodies each capable of traveling autonomously and capable of being remotely operated, acquiring mobile body information about one or more second mobile bodies other than the first mobile body, the one or more second mobile bodies being remotely monitored by a monitor who is in charge of remote monitoring of the first mobile body among the plurality of mobile bodies, determining, based on the remote operation information and the mobile body information, whether to allow the monitor to perform remote operation on the first mobile body, and giving notification based on a result of the determining as to whether to allow the monitor to perform remote operation on the first mobile body.

[Technique 2]

The information processing method according to Technique 1, in which the first mobile body outputs request information for requesting remote operation on the first mobile body. The information processing method further includes acquiring the request information that is output from the first mobile body, and identifying the first mobile body in accordance with the request information.

[Technique 3]

The information processing method according to Technique 1 or 2, in which the remote operation information includes a required time required to perform remote operation on the first mobile body, and the required time includes a time required to determine timing of performing remote operation on the first mobile body, and a time required to perform remote operation on the first mobile body.

[Technique 4]

The information processing method according to Technique 3, in which the required time is determined in advance based on a tool for performing remote operation on the first mobile body.

[Technique 5]

The information processing method according to Technique 3 or 4, in which the required time is determined in advance for each of a plurality of sections in a region within which the first mobile body moves and that is divided into the plurality of sections.

[Technique 6]

The information processing method according to any one of Techniques 3 to 5, in which the required time is determined in advance based on at least one of a date on which remote operation is performed on the first mobile body, a time period during which remote operation is performed on the first mobile body, or a weather in which remote operation is performed on the first mobile body.

[Technique 7]

The information processing method according to Technique 1 or 2, in which whether not performing remote operation on each of the one or more second mobile bodies entails a risk is determined based on the remote operation information and the mobile body information, and when no risk is determined to be entailed, the monitor is determined to be allowed to perform remote operation on the first mobile body.

[Technique 8]

The information processing method according to Technique 7, in which, for each of a plurality of sections in a region within which the one or more second mobile bodies travel and that is divided into the plurality of sections, whether the section has the risk is set in advance.

[Technique 9]

The information processing method according to Technique 8, in which , for each of the plurality of sections, whether the section has the risk is determined in advance based on at least one of a date on which remote operation is performed on the first mobile body, a time period during which remote operation is performed on the first mobile body, or a weather in which remote operation is performed on the first mobile body.

[Technique 10]

The information processing method according to Technique 8 or 9, in which the remote operation information includes a required time required to perform remote operation on the first mobile body, the required time includes a time required to determine timing of performing remote operation on the first mobile body, and a time required to perform remote operation on the first mobile body, and when at least one of the one or more second mobile bodies is located in a section that has the risk among the plurality of sections during the required time, the risk is determined to be entailed.

[Technique 11]

The information processing method according to any one of Techniques 1 to 10, in which when the monitor is determined to be allowed to perform remote operation on the first mobile body, the notification indicating that the monitor is allowed to perform remote operation on the first mobile body is given.

[Technique 12]

The information processing method according to any one of Techniques 1 to 11, in which when the monitor is determined not to be allowed to perform remote operation on the first mobile body, the notification indicating that the first mobile body is to be stopped is given.

[Technique 13]

An information processing device includes a remote operation information acquirer that acquires remote operation information about remote operation on a first mobile body that requires remote operation among a plurality of mobile bodies each capable of traveling autonomously and capable of being remotely operated, a mobile body information acquirer that acquires mobile body information about one or more second mobile bodies other than the first mobile body, the one or more second mobile bodies being remotely monitored by a monitor who is in charge of remote monitoring of the first mobile body among the plurality of mobile bodies, a determiner that determines, based on the remote operation information and the mobile body information, whether to allow the monitor to perform remote operation on the first mobile body, and a notifier that gives notification based on a result of the determining as to whether to allow the monitor to perform remote operation on the first mobile body.

[Technique 14]

A program for causing a computer to execute the information processing method according to any one of Techniques 1 to 12.

[Industrial Applicability]

The present disclosure is applicable in a method or the like that processes information for remotely controlling mobile bodies.

[Reference Signs List]

    1 remote control system
    21 ECU
    22 communication module
    101, 301 communicator
    102, 306 mobile body information acquirer
    103 operator information acquirer
    104 risk map storage
    105 remote operation information storage
    106 first mobile body identifier
    107 remote operation information acquirer
    108 determiner
    109 operational availability determiner

110 operation request distributor
111 mobile body information distributor
112 travel control information distributor
113 dispatch instruction distributor
201 camera
202 laser sensor
203 GNSS
211 acquirer
212 detector
213 self-position estimator
214 determination controller
215 operation request determiner
216 mobile body information output device
302 input acceptor
303 screen generator
304 UI controller
305 operator information output device
307 operation request detector
311 steering wheel controller
312 push button
313 keyboard
314 mouse
315 monitor
316 speaker
D1, Dn operator terminal device
M1, mm mobile body
N network
O1, On operator
S server device
X service system

**Claims**

1. An information processing method for use in an information processing device, the information processing method comprising:

   acquiring remote operation information about remote operation on a first mobile body that requires remote operation among a plurality of mobile bodies each capable of traveling autonomously and capable of being remotely operated;
   acquiring mobile body information about one or more second mobile bodies other than the first mobile body, the one or more second mobile bodies being remotely monitored by a monitor who is in charge of remote monitoring of the first mobile body among the plurality of mobile bodies;
   determining, based on the remote operation information and the mobile body information, whether to allow the monitor to perform remote operation on the first mobile body; and
   giving notification based on a result of the determining as to whether to allow the monitor to perform remote operation on the first mobile body.

2. The information processing method according to claim 1,

   wherein the first mobile body outputs request information for requesting remote operation on the first mobile body, the information processing method further comprising:

   acquiring the request information that is output from the first mobile body; and
   identifying the first mobile body in accordance with the request information.

3. The information processing method according to claim 1,

wherein the remote operation information includes a required time required to perform remote operation on the first mobile body, and

the required time includes a time required to determine timing of performing remote operation on the first mobile body, and a time required to perform remote operation on the first mobile body.

4. The information processing method according to claim 3,
wherein the required time is determined in advance based on a tool for performing remote operation on the first mobile body.

5. The information processing method according to claim 3 or 4,
wherein the required time is determined in advance for each of a plurality of sections in a region within which the first mobile body moves and that is divided into the plurality of sections.

6. The information processing method according to claim 3 or 4,
wherein the required time is determined in advance based on at least one of a date on which remote operation is performed on the first mobile body, a time period during which remote operation is performed on the first mobile body, or a weather in which remote operation is performed on the first mobile body.

7. The information processing method according to claim 1,

wherein whether not performing remote operation on each of the one or more second mobile bodies entails a risk is determined based on the remote operation information and the mobile body information, and
when no risk is determined to be entailed, the monitor is determined to be allowed to perform remote operation on the first mobile body.

8. The information processing method according to claim 7,
wherein, for each of a plurality of sections in a region within which the one or more second mobile bodies travel and that is divided into the plurality of sections, whether the section has the risk is set in advance.

9. The information processing method according to claim 8,
wherein, for each of the plurality of sections, whether the section has the risk is determined in advance based on at least one of a date on which remote operation is performed on the first mobile body, a time period during which remote operation is performed on the first mobile body, or a weather in which remote operation is performed on the first mobile body.

10. The information processing method according to claim 8 or 9,

wherein the remote operation information includes a required time required to perform remote operation on the first mobile body,
the required time includes a time required to determine timing of performing remote operation on the first mobile body, and a time required to perform remote operation on the first mobile body, and
when at least one of the one or more second mobile bodies is located in a section that has the risk among the plurality of sections during the required time, the risk is determined to be entailed.

11. The information processing method according to any one of claims 1 to 4,
wherein when the monitor is determined to be allowed to perform remote operation on the first mobile body, the notification indicating that the monitor is allowed to perform remote operation on the first mobile body is given.

12. The information processing method according to any one of claims 1 to 4,
wherein when the monitor is determined not to be allowed to perform remote operation on the first mobile body, the notification indicating that the first mobile body is to be stopped is given.

13. An information processing device comprising:

a remote operation information acquirer that acquires remote operation information about remote operation on a first mobile body that requires remote operation among a plurality of mobile bodies each capable of traveling autonomously and capable of being remotely operated;
a mobile body information acquirer that acquires mobile body information about one or more second mobile bodies other than the first mobile body, the one or more second mobile bodies being remotely monitored by a monitor who is in charge of remote monitoring of the first mobile body among the plurality of mobile bodies;

a determiner that determines, based on the remote operation information and the mobile body information, whether to allow the monitor to perform remote operation on the first mobile body; and

a notifier that gives notification based on a result of the determining as to whether to allow the monitor to perform remote operation on the first mobile body.

14. A program for causing a computer to execute the information processing method according to any one of claims 1 to 4.

# FIG. 1

# FIG. 2

S

## Server device

**Communicator** — 101

**Mobile body information acquirer** — 102

**Operator information acquirer** — 103

**First mobile body identifier** — 106

**Remote operation information acquirer** — 107

**Determiner** — 108

**Operational availability determiner** — 109

**Operation request distributor** — 110

**Mobile body information distributor** — 111

**Travel control information distributor** — 112

**Dispatch instruction distributor** — 113

**Risk map storage** — 104

**Remote operation information storage** — 105

## FIG. 3

| Operator ID | Mobile body ID under charge of remote monitoring | Mobile body ID being remotely operated | Remote operation tool | Remote operation signal |
|---|---|---|---|---|
| 1 | [1, 2, 3, 4] | 1 | Push button | p (press) |
| 2 | [5, 6, 7, 8] | 5 | Steering wheel controller | a (acceleration) s (operation amount) |
| ... | ... | ... | ... | ... |

EP 4 592 984 A1

## FIG. 4

| Section ID | Northwesternmost point (latitude, longitude) | Northeasternmost point (latitude, longitude) | Southwesternmost point (latitude, longitude) | Southeasternmost point (latitude, longitude) |
|---|---|---|---|---|
| 1 | (34.738579, 135.57476) | (34.738573, 135.57486) | (34.738359, 135.57477) | (34.738359, 135.57487) |
| 2 | (34.738353, 135.57398) | (34.738353, 135.57487) | (34.738282, 135.57399) | (34.738300, 135.57486) |
| ... | ... | ... | ... | ... |

EP 4 592 984 A1

FIG. 5

North

Section with risk

Section with no risk

# FIG. 6

| Remote operation ID | Section ID | Remote operation tool | Required time (seconds) |
|---|---|---|---|
| 1 | 1 | Steering wheel controller | 30 |
|   |   | Push button | 10 |
| 2 | 2 | Steering wheel controller | 15 |
|   |   | Push button | 5 |
| ... | ... | ... | ... |

EP 4 592 984 A1

# FIG. 7

M1

Mobile body

22

Communication module

21

ECU

201

Camera

202

Laser sensor

203

GNSS

211

Acquirer

212

Detector

213

Self-position estimator

214

Determination controller

215

Operation request determiner

216

Mobile body information output device

# FIG. 8

D1

**Operator terminal device**

301 **Communicator**

302 **Input acceptor**

303 **Screen generator**

304 **UI controller**

305 **Operation information output device**

306 **Mobile body information acquirer**

307 **Operation request detector**

311 **Steering wheel controller**

312 **Push button**

313 **Keyboard**

314 **Mouse**

315 **Monitor**

316 **Speaker**

FIG. 9

MAP

M1 (traveling)

M1

M2

M3

M4

M1

EP 4 592 984 A1

## FIG. 10

MAP

M1 (stop) avoid obstacles

M1

M2

M3

M4

M1

# FIG. 11

```
                    ( Start )
                        │
                        ▼
        ┌───────────────────────────────┐
        │ Acquire mobile body information│──S101
        └───────────────────────────────┘
                        │
                        ▼
        ┌───────────────────────────────┐
        │   Acquire operator information │──S102
        └───────────────────────────────┘
                        │
                        ▼           S103
                   ╱─────────────╲              No
              ─────  Does first mobile body exist? ─────────┐
                   ╲─────────────╱                          │
                        │ Yes                               │
                        ▼                                   │
        ┌───────────────────────────────┐                  │
        │      Acquire required time     │──S104            │
        └───────────────────────────────┘                  │
                        │                                   │
                        ▼                                   │
        ┌───────────────────────────────┐                  │
        │ Extract operator information about               │
        │ operator who is in charge of remote │──S105       │
        │ monitoring of first mobile body │                │
        └───────────────────────────────┘                  │
                        │                                   │
                        ▼                                   │
        ┌───────────────────────────────┐                  │
        │ Determine presence or absence  │──S106            │
        │ of risk                        │                  │
        └───────────────────────────────┘                  │
                        │                                   │
                        ▼           S107                    │
                   ╱─────────────╲              No          │
              ───── Is remote operation available? ─────────┤
                   ╲─────────────╱                          │
                        │ Yes                               │
                        ▼                                   │
        ┌───────────────────────────────┐                  │
        │   Transmit operation request   │──S108            │
        └───────────────────────────────┘                  │
                        │◄──────────────────────────────────┘
                        ▼
                    ( End )
```

# FIG. 12

```
┌─────────────┐
│    Start    │
└─────────────┘
        │
        ▼
┌────────────────────────────────┐
│   Identify first mobile body   │──S201
└────────────────────────────────┘
        │
        ▼
┌────────────────────────────────┐
│ Extract position of first mobile│
│ body, planned travel route,    │──S202
│ and obstacle data              │
└────────────────────────────────┘
        │
        ▼
┌────────────────────────────────┐
│ Identify section where first mobile│
│ body lies                      │──S203
└────────────────────────────────┘
        │
        ▼
┌────────────────────────────────┐
│ Determine presence or absence of│
│ obstacles on planned travel route│──S204
└────────────────────────────────┘
        │
        ▼
┌────────────────────────────────┐
│   Predict remote operation tool │──S205
└────────────────────────────────┘
        │
        ▼
┌────────────────────────────────┐
│     Acquire required time      │──S206
└────────────────────────────────┘
        │
        ▼
┌─────────────┐
│     End     │
└─────────────┘
```

# FIG. 13

```
        ┌─────────────┐
        │    Start    │
        └─────────────┘
               │
               ▼
┌──────────────────────────────┐
│    Acquire required time      │──── S301
└──────────────────────────────┘
               │
               ▼
┌──────────────────────────────┐
│ Acquire positions and planned │
│ travel routes of one or more  │──── S302
│ second mobile bodies          │
└──────────────────────────────┘
               │
               ▼
┌──────────────────────────────┐
│ Estimate sections where one or│──── S303
│ more mobile units may lie     │
└──────────────────────────────┘
               │
               ▼
┌──────────────────────────────┐
│ Determine presence or absence │──── S304
│ of risk                       │
└──────────────────────────────┘
               │
               ▼
        ┌─────────────┐
        │     End     │
        └─────────────┘
```

## INTERNATIONAL SEARCH REPORT

| International application No. |
|---|
| **PCT/JP2023/029466** |

| A. CLASSIFICATION OF SUBJECT MATTER |
|---|
| *G08G 1/09*(2006.01)i; *G05D 1/00*(2006.01)i; *G05D 1/02*(2020.01)i<br>FI:   G08G1/09 V; G05D1/02 P; G05D1/00 B |
| According to International Patent Classification (IPC) or to both national classification and IPC |

| B. FIELDS SEARCHED |
|---|
| Minimum documentation searched (classification system followed by classification symbols)<br>    G08G1/00-99/00; G05D1/00; G05D1/02 |
| Documentation searched other than minimum documentation to the extent that such documents are included in the fields searched<br>    Published examined utility model applications of Japan 1922-1996<br>    Published unexamined utility model applications of Japan 1971-2023<br>    Registered utility model specifications of Japan 1996-2023<br>    Published registered utility model applications of Japan 1994-2023 |
| Electronic data base consulted during the international search (name of data base and, where practicable, search terms used) |

| C. DOCUMENTS CONSIDERED TO BE RELEVANT | | |
|---|---|---|
| Category* | Citation of document, with indication, where appropriate, of the relevant passages | Relevant to claim No. |
| A | JP 2022-19169 A (TOKAI NATIONAL HIGHER EDUCATION & RESEARCH SYS.) 27 January 2022 (2022-01-27) | 1-14 |
| A | JP 2022-129234 A (TOYOTA MOTOR CORP.) 05 September 2022 (2022-09-05) | 1-14 |
| A | JP 2018-206223 A (YAHOO JAPAN CORP.) 27 December 2018 (2018-12-27) | 1-14 |

☐ Further documents are listed in the continuation of Box C.      ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **12 September 2023** | **26 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/029466**

| Patent document cited in search report | | | Publication date (day/month/year) | Patent family member(s) | | Publication date (day/month/year) |
|---|---|---|---|---|---|---|
| JP | 2022-19169 | A | 27 January 2022 | (Family: none) | | |
| JP | 2022-129234 | A | 05 September 2022 | US | 2022/0266871 A1 | |
| | | | | EP | 4050447 A1 | |
| | | | | CN | 114954513 A | |
| | | | | KR | 10-2022-0121708 A | |
| JP | 2018-206223 | A | 27 December 2018 | (Family: none) | | |

Form PCT/ISA/210 (patent family annex) (January 2015)

36

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6679657 B